# NEW EUROPEAN PATENT SPECIFICATION

(11) **EP 2 570 280 B2**
(45) Date of publication and mention of the opposition decision: **09.08.2023**
(45) Mention of the grant of the patent: 18.05.2016
(21) Application number: 11306156.8
(22) Date of filing: 15.09.2011
(51) Int. Cl.: B60H 1/00

(54) **Method of cooling air in a vehicle and air conditioning system for a vehicle**
Verfahren zur Kühlen von Luft in einem Fahrzeug und Klimaanlagensystem für ein Fahrzeug
Procédé de refroidissement de l'air dans un véhicule et système de climatisation pour véhicule

(43) Date of publication of application: 20.03.2013
(73) Proprietor: ALSTOM Transport Technologies, 93400 Saint-Ouen (FR); Universitat Politècnica De Catalunya, 08034 Barcelona (ES)
(72) Inventor: Barba Marti, Ricard, 08172 Sant Cugat Del Valles (ES); Nacenta Atmella, Josep Maria, 08015 Barcelona (ES); Bosch Tous, Ricard, 08008 Barcelona (ES)
(74) Representative: Lavoix

(56) References cited:
- EP-A1- 1 291 231
- EP-A2- 1 477 348
- EP-A2- 2 191 990
- US-A- 4 031 712
- US-A1- 2004 118 144
- US-B2- 6 568 205
- J. BATES ET AL.: "A Novel Approach to Air-Conditioning of Underground Railways", THE INSTITUTE OF REFRIGERATION, vol. 104, 6 March 2008 (2008-03-06), pages 6-1-6-16, London

## Description

The present invention relates to a method of cooling air in a vehicle and a vehicle air conditioning system.

Public transport vehicles such as buses, trains and tramways generally have cycle of high frequency of starts/stops with short trip times. This renders difficult to control the air conditioning system to provide thermal comfort to the passenger or to cool down a closed space containing heat producing equipments, such as a technical room, whilst limiting energy consumption of the air conditioning system. A high coefficient of performance (COP) of the air conditioning system is difficult to attain on a complete trip time period. This further renders difficult managing energy loads of the vehicle.

EP 2 191 990 A2 and EP 1 477 348 A2 and "A Novel Approach to Air-Conditionning of Underground Railways", Bates et al, the Institute of Refrigeration Proceedings, vol 104, 2008, disclose operating an air conditioning system for producing cold in excess and subsequently retrieving cold.

An aim of the invention is to propose a method of conditioning air in a vehicle that reduces energy consumption whilst allowing to provide good thermal comfort for the passengers.

To this end, the invention provides a method of cooling inside air in a vehicle as defined in claim 1. According to other embodiments, the method comprises one or several of the features of claims 2 - 7.

The invention also relates to a vehicle air conditioning system as defined in claim 8. According to other embodiments, the air conditioning system comprises one or several of the features of claims 9 and 10.

The invention still relates to a vehicle, namely railway vehicle, as defined in claim 11.

The invention and its advantages will be better understood on reading the following description given solely by way example and with reference to the appended drawings in which:
- Figure 1 is a diagram schematically illustrating a vehicle comprising an air conditioning system for implementing the method of conditioning air of the invention; and
- Figures 2 and 3 illustrate the air conditioning system of Figure 1 in two different configurations.

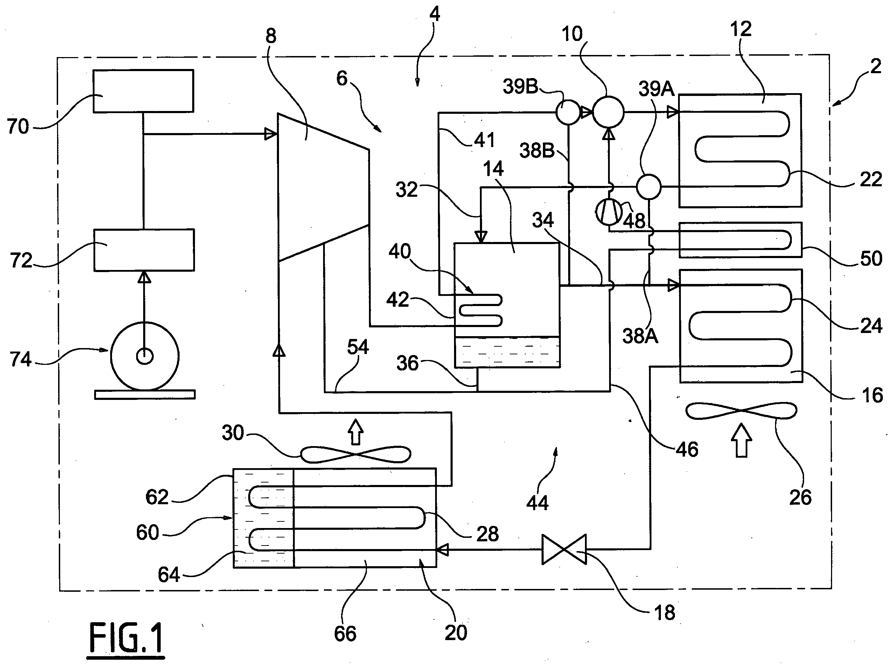

As illustrated on a Figure 1, the vehicle 2, e.g. a railway vehicle, comprises an air conditioning system 4 for conditioning air in a passenger compartment of the vehicle 2.

The air conditioning system 4 is for operating refrigeration cycles with a refrigerant fluid or refrigerant for generating cold and transferring cold to air blown into the passenger compartment.

The air conditioning system 4 comprises a refrigerant circuit 6 for circulation of the refrigerant. The refrigerant circuit 6 comprises a compressor 8, a mixer 10, an absorption heat exchanger or "absorber" 12, a separator 14, a condensation heat exchanger or "condenser" 16, an expansion device 18 and an evaporation heat exchanger or "evaporator" 20.

The compressor 8, the mixer 10, the absorber 12, the separator 14, the condenser 16, the expansion device 18 and the evaporator 20 are fluidly connected in series in a loop arrangement for circulation of the refrigerant.

The absorber 12 is a heat exchanger allowing heat transfer between the refrigerant circulating in absorber coils 22 of the absorber 12 and a fluid circulating through the absorber 12 outside the absorber coils 22.

The condenser 16 is a heat exchanger allowing heat transfer between the refrigerant circulating in condenser coils 24 of the condenser 16 and a fluid circulating through the condenser 16 outside the condenser coils 24.

The fluid circulating through the absorber 12 and the condenser 16 generally is external air outside the passenger compartment. The air conditioning system 4 comprises at least a blower 26 for forcing outside air through the absorber 12 and the condenser 16.

The expansion device 18 is for example an expansion valve, preferably an electronically controlled expansion valve.

The evaporator 20 is a heat exchanger allowing heat transfer between the refrigerant circulating in evaporator coils 28 of the evaporator 20 and a fluid circulating through the evaporator 20 outside the evaporator coils 28.

The fluid circulating through the evaporator 20 is air blown in the passenger compartment. The air conditioning system 4 comprises at least a blower 30 for forcing inside air through the evaporator 20 and into the passenger compartment.

The mixer 10 is configured for mixing the refrigerant with an absorbent fluid or absorbent into a mixture, preferably a zoetrope mixture. An absorbent is a fluid that will allow the refrigerant to dissolve into the absorbent. The absorbent is for example oil, namely lubricant oil, and the refrigerant is for example an HFC gas.

In at least one operational mode, the mixer 10 receives the compressed refrigerant exiting the compressor 6 and absorbent and mixes the compressed refrigerant with the absorbent into a mixture.

The separator 14 is configured for separating the refrigerant from the absorbent. The separator 14 has a mixture inlet 32 for receiving the mixture, a refrigerant outlet 34 for releasing refrigerant and an absorbent outlet 36 for releasing the absorbent.

Optionally, the refrigerant circuit 6 comprises a separator by-pass line 38A arranged for by-passing the separator 14. The separator bypass line 38A extends between the mixture inlet 32 and the refrigerant outlet 34 of the separator 14. The refrigerant circuit 6 comprises a separator by-pass vane 39A for controlling refrigerant flow selectively through the separator by-pass line 38A or the separator 14.

Optionally, the refrigerant circuit 6 comprises an absorber by-pass line 38B arranged for by-passing the mixer 10, the absorber 12 and the separator 14. The absorber bypass line 38B extends between the branch of the refrigeration circuit 6 connecting to the inlet of the mixer 10 and the refrigerant outlet 34 of the separator 14. The refrigerant circuit 6 comprises an absorber by-pass vane 39B for selectively controlling flow of the refrigerant through the mixer 10 and the absorber 12 or through the absorber by-pass-line 38B.Optionally, the refrigerant circuit 6 comprises a separator heat exchanger 40 arranged between a high pressure line 41 of the refrigerant circuit 6 extending from the outlet of the compressor 8 to the mixer 10 and a vessel 42 of the separator 14. The separator heat exchanger 40 is for transferring thermal energy from the refrigerant exiting the compressor 8 at high pressure and high temperature and the fluid in the vessel of the separator 14.

The air conditioning system 4 comprises an absorbent circuit 44 for feeding the mixer 10 with absorbent. The absorbent circuit 44 comprises an absorbent line 46 extending from the absorbent outlet 36 of the separator 14 to the mixer 10 and a pump 48 provided on the absorbent line 46 for circulating the absorbent in the absorbent line 46.

The absorbent circuit 44 optionally comprises an absorbent heat exchanger 50 for cooling the absorbent between the separator 14 and the mixer 10. The absorbent heat exchanger 50 is provided on the absorbent line 46 upstream the pump 48, between the pump 48 and the absorbent outlet 36. The absorbent heat exchanger 50 is for heat exchange between the absorbent and an air flow. The absorbent heat exchanger 50 is placed adjacent the absorber 12 and the condenser 16 for the blower 26 to blow air through the absorber 12, the condenser 16 and the absorbent heat exchanger 50.

Optionally, the absorbent is the same as the lubricant fluid of the compressor 8 and the absorbent circuit 44 comprises a return line 54 allowing feeding a lubricating circuit of the compressor 8 with the absorbent from the absorbent outlet 36 of the separator 14.

The air conditioning system 4 further comprises a cold storage accumulator or unit 60 arranged for a transfer of thermal energy with the refrigerant in the evaporator coils 28.

The cold storage unit 60 is a phase change material cold storage unit. It comprises a reservoir 62 containing a phase change material (PCM) 64 which changes phase in a range of temperature matching that of the refrigerant in the evaporator 20 in operation of the air conditioning system 4.

The evaporator 20 has an air passage 66 for air to pass through the evaporator 20 between the evaporator coils 28 and exchange thermal energy with the refrigerant in the evaporator 20. The air passage 66 and the reservoir 62 are separated. The evaporator coils 28 extend through the air passage 66 for refrigerant/air thermal exchange and through the reservoir 62 for the refrigerant/PCM thermal exchange.

The cold storage unit 60 is thus integrated in the evaporator 20. The evaporator is a combined air/refrigerant and phase change material/refrigerant heat exchanger.

The cold storage unit 60 is adapted for taking cold from the refrigerant when the refrigerant is at lower temperature than the phase change temperature of the phase change material or releasing cold to the refrigerant when the refrigerant is at a higher temperature than the phase change temperature of the phase change material.

The compressor 10 is a variable speed compressor. The compressor 10 is connected to an electric energy source 70 and a regenerative braking energy recovery device 72 adapted for converting braking energy during braking phases of vehicle into electrical energy and feed the compressor 10 with said electrical energy.

The regenerative braking energy recovery device 72 may conventionally comprises an electrical generator adapted for generating a braking couple on a wheel set 74 of the vehicle 2 and in turn generating electrical power.

The air conditioning system 4 comprises a control unit (not shown) for controlling the different equipments of the air conditioning system 4, that is the compressor 8, the mixer 10, the by-pass valve 39, the pump 48 the blowers 26, 30...

The air conditioning system 4 is adapted for implementing a method of cooling air in a vehicle, the method comprising producing cold in excess to cool air and store excess cold in the cold storage unit 60 by implementing a first refrigeration cycle under certain conditions and recovering cold from the cold storage unit 60 by implementing a second refrigeration cycle under other conditions.

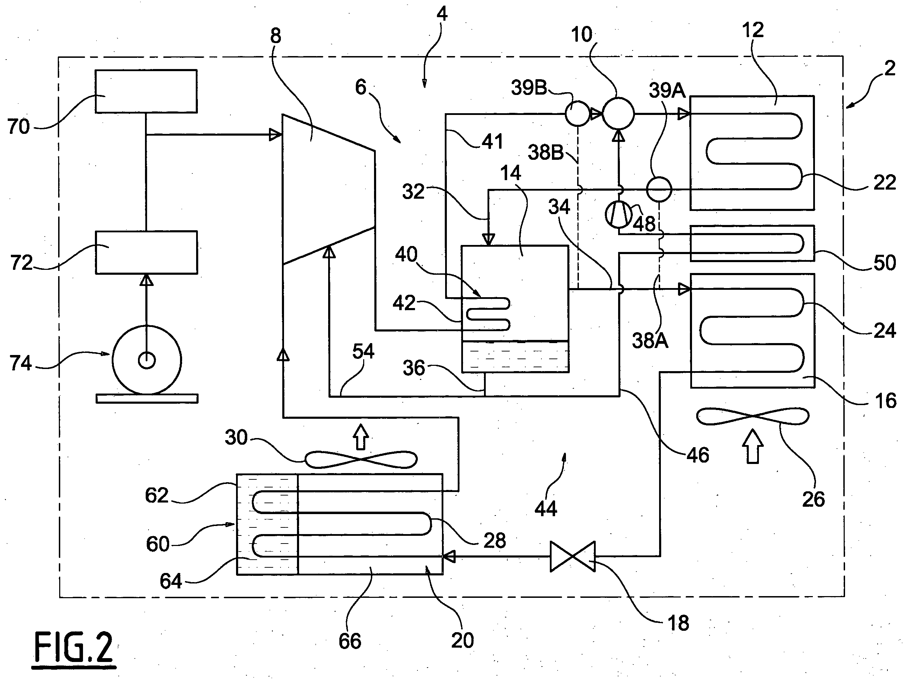

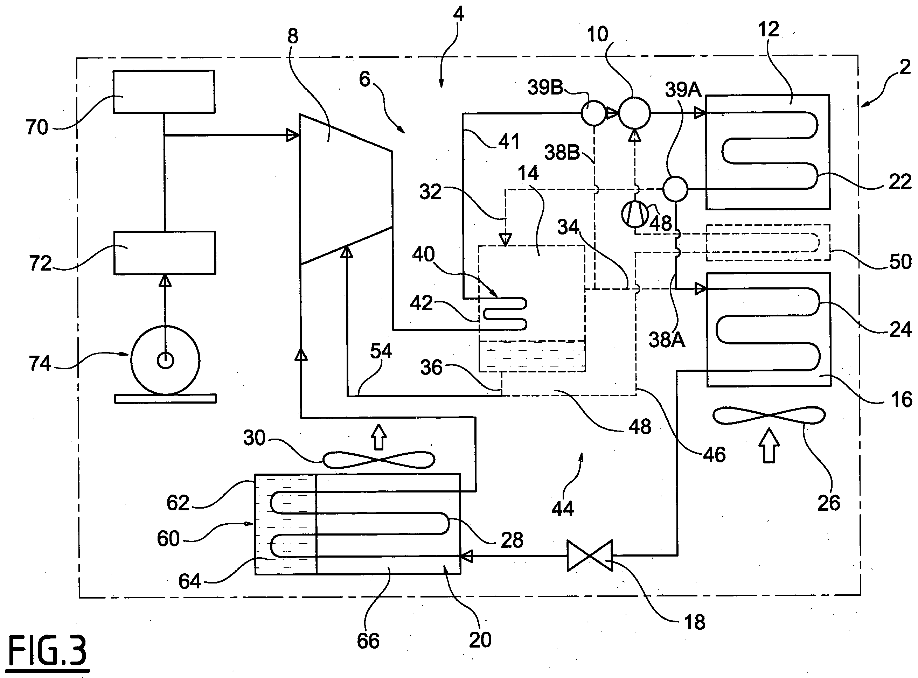

The air conditioning system 4 is adapted for operating the first refrigeration cycle as illustrated on Figure 2 and the second refrigeration cycle as illustrated on Figure 3. On Figure 2 and 3, the equipments not used in the corresponding refrigeration cycle are illustrated in dotted lines.

As illustrated in Figure 2, in the first refrigeration cycle, the compressor 8 runs at a first speed. The pump 48 and the mixer 10 are activated and the separator by-pass valve 39A is controlled for the refrigerant to flow though the separator 14. The first refrigeration cycle thus comprises:
- compressing the refrigerant in the compressor 8;
- mixing the refrigerant with the absorbent in the mixer 10;
- absorbing the refrigerant into the absorbent and condensing the mixture in the absorber 12;
- separating the mixture into refrigerant and absorbent in the separator 14;
- condensing the refrigerant in the condenser 16;
- expanding the refrigerant in the expansion device 18; and
- evaporating the refrigerant in the evaporator 20.

The step of evaporating the refrigerant comprises simultaneously transferring thermal energy between the refrigerant and the air and transferring thermal energy between the refrigerant and the cold storage unit 60.

In the first refrigeration cycle, refrigerant is mixed with absorbent in the mixer 10, the absorber 12 and the separator 14. The absorbent is removed from the refrigerant in the remaining of the refrigerant circuit 6.

As illustrated in Figure 3, in the second refrigeration cycle, the compressor 8 runs at a second speed lower than the first speed, the pump 48 and the mixer 10 are stopped and, optionally, the separator by-pass valve 39A is controlled for the refrigerant to flow through the separator by-pass line 38A thus by-passing the separator 14. The second refrigeration cycle thus comprises:
- compressing the refrigerant in the compressor 8;
- condensing the refrigerant in the absorber 12 and the condenser 16;
- expanding the refrigerant in the expansion device 18; and
- evaporating the refrigerant in the evaporator 20.

In the first refrigeration cycle, the compressor 8 is operated at high rotational speed and consumes high power. The compressor 8 furnishes a large amount of high pressure and high temperature refrigerant and the refrigerant circuit 6 furnishes cold in excess with respect to the cold demand. The excess cold is stored by the cold storage unit 60 during the first refrigeration cycle. The cold storage unit 60 is charged in the first refrigeration cycle.

In the second refrigeration cycle, the compressor 8 is operated at lower speed and consumes lower power. The compressor 8 furnishes a lower amount of high pressure high temperature refrigerant and the refrigeration circuit 6 furnishes in turn a lower amount of cold which might be in deficit with respect to the cold demand. Cold is provided to the refrigerant in the evaporator 20 by the cold storage unit 60 and transferred to the air passing though the evaporator 20. The cold storage unit 60 is discharged in the first refrigeration cycle.

Advantageously, the first refrigeration cycle is operated in a braking phase of the vehicle using regenerative braking energy to electrically feed the compressor 8 and the second refrigeration cycle is operated in a coasting phase and/or a traction phase of the vehicle.

Also advantageously, the first refrigeration cycle is operated in a phase of high condensation capacity..Condensation capacity depends on outside air conditions. Outside air conditions may vary along the travel of a vehicle e.g. due to a tunnel section of the travel. It is possible to detect the condensation capacity and to take the opportunity of high condensation capacity to implement the first refrigeration cycle with limiting energy consumption. In a repetitive travel of a vehicle such as in public transports, high condensation capacity sections of the travel may be identified and operation of the first refrigeration cycle may be activated as a function of travel time or a travel distance, or by detection of entry of the vehicle in a high condensation capacity section.

The cold storage unit 60 thus operates as a regulator for storing cold from the refrigerant or releasing cold to the refrigerant depending on whether there is an excess or a deficit of cold. The cold storage unit 60 integrated to the evaporator 20 is efficient and operates in an easily controllable manner.

The cold storage unit use latent heating energy of the phase change material (PCM) to store the maximum energy. The change phase material may be water/ice or other phase change material such as organic materials, e.g. paraffins.

The PCM exchanges thermal energy through the evaporator coils 28 so giving high efficiency. The evaporator is configured for the refrigerant in the evaporator 20 to exchange thermal energy on the one hand with air and on the other hand with the PCM separately but though the same coils.

As illustrated in Figures 1 - 3, each evaporator coil 28 passing alternatively though the air passage and through the cold storage device several times.

Preferably, the phase change temperature of the phase change material is chosen between 5°C and 10°C.

The absorber 12 is used alternatively as absorber in the first refrigerant cycle and as condenser in the second refrigerant cycle.

The air conditioning system 14 is also operable to operate a third refrigeration cycle in which the control unit controls the absorber by-pass valve 39B for the refrigerant to flow through the absorber by-pass line 39B thus by-passing the mixer 10, the absorber 12 and separator 14. The third refrigeration cycle thus comprises successively:
- compressing the refrigerant in the compressor 8;
- condensing the refrigerant in the condenser 16 only;
- expanding the refrigerant in the expansion device 18; and
- evaporating the refrigerant in the evaporator 20.

The third refrigeration cycle may be operated as a degraded mode, e.g. in case of failure of the absorber 12 or the separator 14.

The air conditioning system 4 is operable to operate the first refrigeration cycle which is an hybrid refrigeration / absorption cycle. The absorption technology allows to manage the transitory energy of the refrigerant at high temperature and high pressure furnished by the compressor working at high speed. The absorption technology allows working with higher equivalent pressure and temperature in the absorber coils 22

A public transport vehicle as a high frequency of start/stops during a trip. The method alternating the first refrigeration cycle in braking phases and the second refrigeration cycle during traction and/or coasting phases allows increasing the coefficient of performance (COP) of the refrigeration circuit over several trips. The energy consumption of the compressor 8 is reduced.

The air conditioning system and the method implementing the first refrigeration cycle using braking regenerative energy to store cold and releasing cold to the refrigerant in traction and/or coasting phases and/or during phases of high condensation capacity allows smoothing energy load demand curve in electrical consumption of the vehicle.

The air conditioning system 4 is adapted with respect to a conventional refrigeration circuit comprising a compressor, a condenser, an expansion device and an evaporator with being kept compact, low cost and without excessive weight increase.

The cold storage unit integrated in the evaporator is advantageous independently from the regenerative braking energy recovery.

Hence, the invention generally relates to a method of cooling air in a vehicle using a refrigeration circuit for operating at least one refrigeration cycle with a refrigerant, comprising evaporating the refrigerant though an evaporator with transferring thermal energy between the refrigerant in the evaporator and air flowing through the evaporator and transferring thermal energy between the refrigerant in the evaporator and the cold storage device.

The first refrigeration cycle combining refrigeration cycle and absorption technology is also advantageous independently from regenerative braking energy recovery or high condensation capacity.

Hence, the invention generally relates to a method of cooling air in a vehicle using a refrigeration circuit for operating at least one refrigeration cycle with a refrigerant, comprising the steps of
- compressing the refrigerant in a compressor;
- mixing the refrigerant with the absorbent in a mixer;
- absorbing the refrigerant into the absorbent and condensing the mixture in an absorber;
- separating the mixture into refrigerant and absorbent in a separator;
- condensing the refrigerant in a condenser;
- expanding the refrigerant in an expansion device; and
- evaporating the refrigerant in the evaporator with storing cold in a cold storing system.

The invention applies to vehicle in general.

The invention applies in particular to electrical and hybrid propulsion vehicles which comprise electrical motor which are intrinsically adapted for producing braking regenerative energy.

The invention applies to railway vehicle, in a more general manner to public transport vehicle such as buses, trains and tramways.

## Claims

1. Method of cooling inside air in a vehicle using a refrigeration circuit (6) for operating refrigeration cycles comprising compressing a refrigerant in a compressor, condensing the refrigerant in a condenser, expanding the refrigerant in an expansion device and evaporating the refrigerant in an evaporator to produce cold, the method comprising operating a first refrigeration cycle for producing cold in excess to cool inside air and store excess cold in a cold storage unit (60) in a first phase and operating a second refrigeration cycle for retrieving cold from the cold storage unit (60) in a second phase, and the first refrigeration cycle is operated using regenerative braking energy during a braking phase of the vehicle and the second refrigeration cycle is operated during a coasting phase and/or a traction phase of the vehicle, **characterized in that** the method comprises evaporating the refrigerant in the evaporator (20) with transferring thermal energy between the refrigerant in the evaporator (20) and air flowing through the evaporator (20) and transferring thermal energy between the refrigerant in the evaporator (20) and the cold storage unit (60), the cold storage unit (60) being a phase change material cold storage unit (60) comprising a reservoir (62) containing a phase change material (64), the evaporator (20) comprising evaporator coils (28) for circulation of the refrigerant and an air passage (66) for air to pass through the evaporator (20) between the evaporator coils (28), the air passage (66) and the reservoir (62) being separated, the evaporator coils (28) extending through the air passage (66) for refrigerant/air thermal exchange and through the reservoir (62) for the refrigerant/phase change material thermal exchange.

2. Method as in claim 1, wherein the first refrigeration cycle is operated during a phase of high condensation capacity and the second refrigeration cycle is operated during a phase of low condensation capacity.

3. Method as in any preceding claim, wherein the first refrigeration cycle comprises the steps of:
- compressing the refrigerant in the compressor (8);
- mixing the refrigerant with the absorbent in a mixer (10);
- absorbing the refrigerant into the absorbent and condensing the mixture in an absorber (12);
- separating the mixture into refrigerant and absorbent in a separator (14);
- condensing the refrigerant in the condenser (16);
- expanding the refrigerant in an expansion device (18); and
- evaporating the refrigerant in the evaporator (20).

4. Method as in claim 3, wherein the first refrigeration cycle comprises transferring heat from the compressed refrigerant to the mixture in the separator (14).

5. Method as in claim 3 or 4, wherein the step of mixing comprises mixing compressed refrigerant with absorbent separated from the refrigerant in the separator (14).

6. Method as in anyone of claims 3 to 5, comprising feeding absorbent to a lubricating circuit of the compressor (8).

7. Method as in any preceding claim wherein the second refrigeration cycle comprises the steps of:
- compressing the refrigerant in the compressor (8);
- condensing the refrigerant in the absorber (12) and/or the condenser (16);
- expanding the refrigerant in the expansion device (18);
- evaporating the refrigerant in the evaporator (20).

8. Vehicle air conditioning system comprising a refrigeration circuit (6) for circulation of a refrigerant, the refrigerant circuit (6) comprising a variable speed compressor (8), a condenser (16), an expansion device (18) and an evaporator (20), a regenerative braking energy device (72) for recovering energy during braking phases of the vehicle feeding the compressor (8), and a cold storage unit (60), the system being **characterized in that** the cold storage unit (60) being a phase change material cold storage unit (60) comprising a reservoir (62) containing a phase change material (64), the evaporator (20) comprises evaporator coils (28) for circulation of the refrigerant and an air passage (66) for air to pass through the evaporator (20) between the evaporator coils (28), the air passage (66) and the reservoir (62) being separated, the evaporator coils (28) extending through the air passage (66) for refrigerant/air thermal exchange and through the reservoir (62) for the refrigerant/phase change material thermal exchange, the system comprising a control unit configured to operate the method as in anyone of claims 1 - 7.

9. Vehicle air conditioning system as in claim 8, wherein the refrigeration circuit further comprises a mixer (10) for mixing the refrigerant exiting the compressor with an absorbent, an absorber (12) and a separator (14) for separating the refrigerant from the absorbent arranged in serial configuration in the refrigeration circuit (6) between the compressor (8) and the condenser (12).

10. Vehicle air conditioning system as in claim 9, comprising an absorbent line (44) for feeding the mixer (10) with absorbent separated from the refrigerant in the separator (14).

11. Vehicle, namely railway vehicle, comprising an air conditioning system as in anyone of claims -8 - 10.

## Patentansprüche

1. Verfahren zum Kühlen von Innenraumluft in einem Fahrzeug unter Verwendung eines Kältekreislaufs (6) zum Durchführen von Kühlzyklen, welche ein Komprimieren eines Kältemittels in einem Kompressor, ein Kondensieren des Kältemittels in einem Kondensator, ein Expandieren des Kältemittels in einer Expansionsvorrichtung und ein Verdampfen des Kältemittels in einem Verdampfer zum Erzeugen von Kälte umfassen, wobei das Verfahren das Durchführen eines ersten Kühlzyklus zum Erzeugen eines Kälteüberschusses, um Innenraumluft zu kühlen und überschüssige Kälte in einer Kältespeichereinheit (60) zu speichern, in einer ersten Phase und das Durchführen eines zweiten Kühlzyklus zum Rückgewinnen von Kälte aus der Kältespeichereinheit (60) in einer zweiten Phase umfasst, und der erste Kühlzyklus unter Verwendung von regenerativer Bremsenergie während einer Bremsphase des Fahrzeugs durchgeführt wird und der zweite Kühlzyklus während einer Rollphase und/oder einer Zugkraft-Phase des Fahrzeugs durchgeführt wird, **dadurch gekennzeichnet, dass** das Verfahren das Verdampfen des Kältemittels im Verdampfer (20) mit Übertragung von thermischer Energie zwischen dem Kältemittel im Verdampfer (20) und durch den Verdampfer (20) strömender Luft und Übertragung thermischer Energie zwischen dem Kältemittel im Verdampfer (20) und der Kältespeichereinheit (60) umfasst, wobei die Kältespeichereinheit (60) eine Phasenwechselmaterial-Kältespeichereinheit (60) ist, die ein Reservoir (62) umfasst, das ein Phasenwechselmaterial (64) enthält, wobei der Verdampfer (20) Verdampferschlangen (28) für die Zirkulation des Kältemittels und einen Luftdurchgang (66) für den Durchgang von Luft durch den Verdampfer (20) zwischen den Verdampferschlangen (28) umfasst, der Luftdurchgang (66) und das Reservoir (62) getrennt sind, wobei sich die Verdampferschlangen (28) durch den Luftdurchgang (66) für den Wärmeaustausch Kältemittel/Luft und durch das Reservoir (62) für den Wärmeaustausch Kältemittel/Phasenwechselmaterial erstrecken.

2. Verfahren gemäß Anspruch 1, wobei der erste Kühlzyklus während einer Phase hoher Kondensationsleistung und der zweite Kühlzyklus während einer Phase niedriger Kondensationsleistung durchgeführt wird.

3. Verfahren zum Kühlen von Luft gemäß einem der vorhergehenden Ansprüche, wobei der erste Kühlzyklus die Schritte umfasst:
- Komprimieren des Kältemittels in dem Kompressor (8);
- Mischen des Kältemittels mit einem Absorbens in einem Mischer (10);
- Absorbieren des Kältemittels in das Absorbens und Kondensieren der Mischung in einem Absorber (12);
- Auftrennen der Mischung in Kältemittel und Absorbens in einem Separator (14);
- Kondensieren des Kältemittels in dem Kondensator (16);
- Expandieren des Kältemittels in einer Expansionsvorrichtung (18); und
- Verdampfen des Kältemittels in dem Verdampfer (20).

4. Verfahren gemäß Anspruch 3, wobei der erste Kühlzyklus das Übertragen von Wärme vom komprimierten Kältemittel auf die Mischung im Separator (14) umfasst.

5. Verfahren gemäß Anspruch 3 oder 4, wobei der Schritt des Mischens das Mischen von komprimiertem Kältemittel mit von dem Kältemittel im Separator (14) abgetrenntem Absorbens umfasst.

6. Verfahren gemäß einem der Ansprüche 3 bis 5 umfassend das Einspeisen des Absorbens in einen Schmierkreislauf des Kompressors (8).

7. Verfahren gemäß einem der vorhergehenden Ansprüche, wobei der zweite Kühlzyklus die Schritte umfasst:
- Komprimieren des Kältemittels im Kompressor (8);
- Kondensieren des Kältemittels in dem Absorber (12) und/oder dem Kondensator (16);
- Expandieren des Kältemittels in der Expansionsvorrichtung (18);
- Verdampfen des Kältemittels im Verdampfer (20).

8. Fahrzeug-Klimaanlage enthaltend einen Kältekreislauf (6) zur Zirkulation eines Kältemittels, wobei der Kältekreislauf (6) einen Kompressor (8) mit variabler Drehzahl, einen Kondensator (16), eine Expansionsvorrichtung (18) und einen Verdampfer (20) umfasst, und eine den Kompressor (8) speisende regenerative Bremsenergie-Vorrichtung (72) zur Gewinnung von Energie während Bremsphasen des Fahrzeugs und eine Kältespeichereinheit (60), wobei die Anlage **dadurch gekennzeichnet ist, dass** die Kältespeichereinheit (60) eine Phasenwechselmaterial-Kältespeichereinheit (60) ist, die ein Reservoir (62) umfasst, das ein Phasenwechselmaterial (64) enthält, wobei der Verdampfer (20) Verdampferschlangen (28) für die Zirkulation des Kältemittels und einen Luftdurchgang (66) für den Durchgang von Luft durch den Verdampfer (20) zwischen den Verdampferschlangen (28) umfasst, der Luftdurchgang (66) und das Reservoir (62) getrennt sind, wobei sich die Verdampferschlangen (28) durch den Luftdurchgang (66) für den Wärmeaustausch Kältemittel/Luft und durch das Reservoir (62) für den Wärmeaustausch Kältemittel/Phasenwechselmaterial erstrecken, wobei die Anlage eine Kontrolleinheit enthält, welche zum Durchführen des Verfahrens gemäß einem der Ansprüche 1 - 7 konfiguriert ist.

9. Fahrzeug-Klimaanlage gemäß Anspruch 10, wobei der Kältekreislauf außerdem einen Mischer (10) zum Mischen des den Kompressor verlassenden Kältemittels mit einem Absorbens, einen Absorber (12) und einen Separator (14) zum Abtrennen des Kältemittels vom Absorbens enthält, welche in serieller Konfiguration im Kältekreislauf (6) zwischen dem Kompressor (8) und dem Kondensator (12) angeordnet sind.

10. Fahrzeug-Klimaanlage gemäß Anspruch 9 enthaltend eine Absorbens-Leitung (44) zur Speisung des Mischers (10) mit vom Kältemittel im Separator (14) abgetrenntem Absorbens.

11. Fahrzeug, nämlich Schienenfahrzeug, enthaltend eine Fahrzeug-Klimaanlage gemäß einem der Ansprüche -8 - 10.

## Revendications

1. Procédé de refroidissement de l'air intérieur d'un véhicule à l'aide d'un circuit de réfrigération (6) destiné à déclencher des cycles de réfrigération, qui comprend la compression d'un réfrigérant dans un compresseur, la condensation du réfrigérant dans un condenseur, la dilatation du réfrigérant dans un dispositif de détente, et l'évaporation du réfrigérant dans un évaporateur afin de produire du froid, le procédé comprenant le déclenchement d'un premier cycle de réfrigération afin de produire du froid en excès de façon à refroidir l'air intérieur, et de stocker l'excédent de froid dans une unité de stockage du froid (60) lors d'une première phase, et le déclenchement d'un second cycle de réfrigération afin de récupérer le froid de l'unité de stockage du froid (60) lors d'une seconde phase, le premier cycle de réfrigération étant déclenché à l'aide d'une énergie de freinage régénérative pendant une phase de freinage du véhicule, et le second cycle de réfrigération étant déclenché pendant une phase de roue libre et/ou une phase de traction du véhicule, **caractérisé en ce que** le procédé comprend l'évaporation du réfrigérant dans l'évaporateur (20) avec transfert de l'énergie thermique entre le réfrigérant contenu dans l'évaporateur (20) et l'air qui circule dans l'évaporateur (20), et le transfert de l'énergie thermique entre le réfrigérant contenu dans l'évaporateur (20) et l'unité de stockage du froid (60), l'unité de stockage de froid (60) étant une unité de stockage à froid à matériau à changement de phase (60) comprenant un réservoir (62) contenant un matériau à changement de phase (64), l'évaporateur (20) comprenant des serpentins d'évaporateur (28) pour la circulation du réfrigérant et un passage d'air (66) pour le passage de l'air dans l'évaporateur (20) entre les serpentins d'évaporateur (28), le passage d'air (66) et le réservoir (62) étant séparés, les serpentins d'évaporation (28) s'étendant à travers le passage d'air (66) pour l'échange thermique réfrigérant/air et à travers le réservoir (62) pour l'échange thermique réfrigérant/matériau à changement de phase.

2. Procédé selon la revendication 1, dans lequel le premier cycle de réfrigération est déclenché pendant une phase de capacité de condensation élevée, et le second cycle de réfrigération est déclenché pendant une phase de faible capacité de condensation.

3. Procédé de refroidissement d'air selon l'une quelconque des revendications précédentes, dans lequel le premier cycle de réfrigération comprend les étapes qui consistent à :
- comprimer le réfrigérant dans le compresseur (8) ;
- mélanger le réfrigérant avec l'absorbant dans un mélangeur (10) ;
- absorber le réfrigérant dans l'absorbant et condenser le mélange dans un absorbeur (12) ;
- séparer le mélange en un réfrigérant et en un absorbant dans un séparateur (14) ;
- condenser le réfrigérant dans le condenseur (16) ;
- dilater le réfrigérant dans un dispositif de détente (18) ; et
- évaporer le réfrigérant dans l'évaporateur (20).

4. Procédé selon la revendication 3, dans lequel le premier cycle de réfrigération comprend le transfert de la chaleur du réfrigérant comprimé vers le mélange dans le séparateur (14).

5. Procédé selon la revendication 3 ou 4, dans lequel l'étape de mélange comprend le mélange du réfrigérant comprimé avec l'absorbant séparé du réfrigérant dans le séparateur (14).

6. Procédé selon l'une quelconque des revendications 3 à 5, qui comprend le fait de fournir l'absorbant à un circuit de lubrification du compresseur (8).

7. Procédé selon l'une quelconque des revendications précédentes, dans lequel le second cycle de réfrigération comprend les étapes de :
- comprimer le réfrigérant dans le compresseur (8) ;
- condenser le réfrigérant dans l'absorbeur (12) et/ou le condenseur (16) ;
- détendre le réfrigérant dans le dispositif de détente (18) ;
- évaporer le réfrigérant dans l'évaporateur (20).

8. Système de climatisation de véhicule qui comprend un circuit de réfrigération (6) destiné à faire circuler un réfrigérant, le circuit de réfrigérant (6) comprenant un compresseur à vitesse variable (8), un condenseur (16), un dispositif de détente (18) et un évaporateur (20), et un dispositif à énergie de freinage régénérative (72) destiné à récupérer l'énergie pendant les phases de freinage du véhicule et à alimenter le compresseur (8), et une unité de stockage du froid (60), le système étant **caractérisé en ce que** l'unité de stockage de froid (60) étant une unité de stockage à froid à matériau à changement de phase (60) comprenant un réservoir (62) contenant un matériau à changement de phase (64), l'évaporateur (20) comprend des serpentins d'évaporateur (28) pour la circulation du réfrigérant et un passage d'air (66) pour le passage de l'air dans l'évaporateur (20) entre les serpentins d'évaporateur (28), le passage d'air (66) et le réservoir (62) étant séparés, les serpentins d'évaporation (28) s'étendant à travers le passage d'air (66) pour l'échange thermique réfrigérant/air et à travers le réservoir (62) pour l'échange thermique réfrigérant/matériau à changement de phase, le système comprenant une unité de commande configurée pour exécuter le procédé selon l'une quelconque des revendications 1 à 7.

9. Système de climatisation de véhicule selon la revendication 8, dans lequel le circuit de réfrigération comprend en outre un mélangeur (10) destiné à mélanger le réfrigérant qui sort du compresseur avec un absorbant, un absorbeur, (12) et un séparateur (14) destiné à séparer le réfrigérant de l'absorbant, placé selon une configuration en série dans le circuit de réfrigération (6), entre le compresseur (8) et le condenseur (12).

10. Système de climatisation de véhicule selon la revendication 9, qui comprend une conduite d'absorbant (44) destinée à alimenter le mélangeur (10) avec l'absorbant séparé du réfrigérant dans le séparateur (14).

11. Véhicule, à savoir véhicule de chemin de fer, qui comprend un système de climatisation selon l'une quelconque des revendications 8 à 10.
